# EUROPÄISCHE PATENTSCHRIFT

(11) **EP 2 157 400 B1**
(45) Veröffentlichungstag und Bekanntmachung des Hinweises auf die Patenterteilung: **20.07.2011**
(21) Anmeldenummer: 09014228.2
(22) Anmeldetag: 06.05.2002
(51) Int. Cl.: G01B 5/012, G01B 7/012, G01B 21/04, B25J 9/16

(54) **Kalibrierkörper für ein Koordinatenmessgerät und Verfahren zum Kalibrieren eines Koordinatenmessgerätes**
Calibration body for a coordinate measuring device and method for calibrating the same
Corps de calibrage pour un appareil de mesure de coordonnées et procédé de calibrage d'un appareil de mesure de coordonnées

(30) Priorität: 08.05.2001 DE 10122200
(43) Veröffentlichungstag der Anmeldung: 24.02.2010
(62) Teilanmeldung aus: 02742959.6
(73) Patentinhaber: Carl Zeiss Industrielle Messtechnik GmbH, 73447 Oberkochen (DE)
(72) Erfinder: Ruck, Otto, 73479 Pfahlheim (DE)
(74) Vertreter: Diehl & Partner GbR

(56) Entgegenhaltungen:
- EP-A- 0 389 108
- EP-A- 0 508 686
- EP-A- 0 786 644
- US-A- 5 848 477

## Beschreibung

Die Erfindung betrifft ein Verfahren zum Kalibrieren eines Tastkopfes sowie einen Kalibrierkörper zum Antasten durch den Taststift in einem Verfahren zum Kalibrieren des Tastkopfes bzw. des Koordinatenmeßgerätes.

Herkömmliche Koordinatenmeßgeräte weisen eine Werkstückhalterung zur Anbringung eines zu vermessenden bzw. anzutastenden Werkstückes und einen bezüglich der Werkstückhalterung räumlich verfahrbaren Tastkopf auf. An dem Tastkopf ist ein Taststift in einer Ruhelage bezüglich des Tastkopfes gehaltert, wobei Auslenkungen des Taststiftes aus dieser Ruhelage gegen Federkraft von dem Tastkopf registriert werden. Zur Bestimmung von Koordinaten einer Oberfläche des Werkstückes wird der Tastkopf bezüglich der Werkstückhalterung räumlich verfahren, bis eine Spitze des Taststiftes, welche beispielsweise die Gestalt einer Kugel oder Scheibe aufweisen kann, mit der Oberfläche des Werkstückes in Berührungskontakt kommt. Dies führt zu einer Auslenkung der Tastspitze aus ihrer Ruhelage, welche von dem Tastkopf registriert wird. Sodann werden die Relativpositionen des Tastkopfes bezüglich der Werkstückhalterung und damit bei ebenfalls ermittelter Größe der Auslenkung die Koordinaten der Werkstückoberfläche in einem wählbaren Koordinatensystem bestimmt. Es können auf ähnliche Weise weitere Koordinaten von Oberflächenpunkten des Werkstückes ermittelt werden. Es ist ebenfalls möglich, den Tastkopf relativ zu dem Werkstück so zu verfahren, daß der Taststift mit einer vorbestimmten Anlagekraft gegen die Werkstückoberfläche gedrückt wird, indem eine Auslenkung des Taststiftes aus seiner Ruhelage während der Bewegung derart aufrechterhalten wird, daß die die Ruhelage definierende Feder die gewünschte Andruckkraft der Tastspitze an die Werkstückoberfläche bereitstellt.

Hierzu ist es notwendig, daß die Ruhelage des Taststiftes relativ zu dem Tastkopf wohldefiniert ist, daß die Feder eine definierte und reproduzierbare Rückstellkraft in Abhängigkeit von der Auslenkung des Taststiftes aus der Ruhelage bereitstellt, und daß die Auslenkung des Taststiftes aus der Ruhelage von einem hierzu vorgesehenen Auslenkungsmeßsystem mit ausreichender Präzision erfaßt wird.

Aus EP 0389108 A ist ein Kalibrierkörper für einen Tastkopf bekannt, wobei in den Kalibrierkörper drei gleich große Kugeln derart eingebettet sind, dass sie an einer Oberseite des Körpers vorstehen und die Mittelpunkte der drei Kugeln auf einem Kreis gleichmäßig verteilt angeordnet sind. Zum Kalibrieren des Tastkopfes, an dem ein Taststift angebracht ist, wird die Spitze des Taststiftes in den Mittelpunkt des Kreises, auf dem die Mittelpunkte der drei Kugeln angeordnet sind, eingetastet. Durch Verfahren des Tastkopfes hin zu sechs Positionen bei eingetasteter Tastspitze wird die Orientierung des Koordinatensystems des Tastkopfes bezüglich eines Bezugssystems bestimmt.

Die Druckschrift US 5,848,477 A offenbart ein Koordinatenmessgerät mit einem Taststift, dessen Orientierung dadurch einstellbar ist, dass der Taststift mit seiner Tastkugel in eine von mehreren Zentrierlücken eines Körpers eingefahren wird und die Messschlitten des Koordinatenmessgeräts auf kreisförmigen Bahnen gesteuert werden.

Aus der Druckschrift EP 0 786 644 A ist ein Kugelstab bekannt, der mit seinem einem Ende an einer Spindel einer Maschine befestigt wird, während das andere Ende an einem Sockel angebracht ist. Der Kugelstab ist teleskopartig ausziehbar und wird zur Bestimmung der Kreisbahn eingesetzt, entlang der sich die Spindel bewegt.

Aus DE 24 40 692 B1 ist ein Tastkopf für ein Koordinatenmeßgerät bekannt, bei dem ein Taststift an einem Tastkopfchassis über ein Membranfedersystem gehalten ist, wobei das Membranfedersystem an einem Ort des Taststiftes angreift und diesen um diesen Ort in zwei Raumrichtungen schwenkbar lagert, wobei das Membranfedersystem auch Auslenkungen dieses Ortes in Längsrichtung des Taststiftes erlaubt. Von dem Ort, an dem das Membranfedersystem an den Taststift angreift, erstreckt sich in eine der Taststiftspitze entgegengesetzte Richtung ein Fortsatz, der an drei jeweils orthogonal zueinander sich erstreckenden Stäben Ferritkerne trägt, von denen ein jeder in eine Sensorspule eintaucht. Über diese Spulen können Auslenkungen des Taststiftes aus seiner Ruhelage in drei Raumrichtungen elektrisch erfaßt werden.

Bei dem herkömmlichen Tastkopf sind die Federkräfte, die Auslenkungen aus der Ruhelage entgegenwirken, für die drei Raumrichtungen sehr unterschiedlich, was beim Antasten von schräg zum Tastkopf orientierter Flächen zu Meßungenauigkeiten führt. Ferner werden bei dem herkömmlichen Tastkopf die maximalen Auslenkwege als zu gering empfunden.

Es ist eine Aufgabe der Erfindung, ein Verfahren zum Kalibrieren eines Tastkopfes bzw. eines Koordinatenmeßgerätes vorzuschlagen sowie einen Kalibrierkörper hierfür bereitzustellen.

Die Erfindung geht von einem Tastkopf aus, der ein an dem Koordinatenmeßgerät anbringbares Tastkopfchassis, eine an dem Tastkopfchassis aus einer Ruhelage auslenkbar gehalterte Taststifthalterung mit einer Längsachse, eine Federanordnung zur Bereitstellung einer Federkraft zur Rückführung der Taststifthalterung in die Ruhelage und ein Auslenkungsmeßsystem zur Erfassung einer Auslenkung der Taststifthalterung bezüglich des Tastkopfchassis aufweist. An einem ersten Ort der Taststifthalterung greift hierbei eine an dem Tastkopfchassis vorgesehene Führung an, welche diesen ersten Ort relativ zu dem Tastkopfchassis in eine Richtung verlagerbar führt, die im wesentlichen mit der Längsrichtung zusammenfällt.

Die Federanordnung greift zur Rückstellung der Taststifthalterung in ihre Ruhelage an einem zweiten Ort der Taststifthalterung an welcher von dem ersten Ort mit Abstand in Längsachse der Taststifthalterung angeordnet ist.

Hierbei liegt die Idee zugrunde, die Funktionen der Führung der Taststifthalterung in Längsrichtung und die Funktion der Rückstellung der Taststifthalterung in ihre Ruhelage voneinander zu entkoppeln, indem die diese beiden Funktionen bereitstellenden Komponenten mit Abstand voneinander an der Taststifthalterung angreifen. Hierdurch kann die Führung ihre Führungsfunktion, das heißt das Zulassen von Auslenkungen in Führungsrichtung und eine entsprechend starre Halterung quer zur Führungsrichtung besonders präzise erfüllen, wobei die Taststifthalterung um den Ort, an dem die Führung an diese angreift, schwenkbar ist. Die durch diese Verschwenkung erfolgte Auslenkung aus der Ruhelage wird durch die Federanordnung zurückgestellt, welche aufgrund des Abstandes zwischen Führung und Angriffsort der Federanordnung mit einer vergleichsweise guten Hebelwirkung die Rückstellkraft wohldosiert und reproduzierbar aufbringt. Ferner kann die von einer Führungsfunktion weitgehend befreite Federanordnung vergleichsweise einfach im Hinblick auf die Bereitstellung einer im wesentlichen richtungsabhängigen Stärke der Rückstellkraft ausgelegt werden.

Im Hinblick auf eine günstige Hebelwirkung der auf die Tastspitzenhalterung angreifenden Federkraft ist der zweite Ort zwischen der Tastspitze und dem Ort angebracht, an dem die Führung an die Taststifthalterung angreift.

Die Führung kann eine Gleitführung sein, welche beispielsweise eine an dem Tastkopfchassis festgelegte Gleitbuchse aufweist, in der die Taststifthalterung verschiebbar gelagert ist. Vorzugsweise ist die Führung jedoch so aufgebaut, daß in ihr keine Komponenten gleitend verschiebbar aneinander gelagert sind. Dies ist vorzugsweise durch eine Membran realisiert, welche in Membranebene im wesentlichen nicht komprimierbar bzw. dehnbar ist und eine Flexibilität in Membranquenrichtung aufweist. Vorzugsweise ist eine solche Membran durch eine Blattfeder gebildet, welche einerseits an dem Tastkopfchassis und andererseits an der Taststifthalterung festgelegt ist.

Eine leichtgängige Führungswirkung wird vorzugsweise dadurch erreicht, daß die Membran auf Seiten des Tastkopfchassis in einem Bereich festgelegt ist, der sich lediglich über einen Teilumfang des Tastkopfchassis um die Längsachse erstreckt. Dieser Bereich erstreckt sich vorzugsweise über weniger als 40° und stärker bevorzugt über weniger als 20° um die Längsachse.

Die Membran kann in Projektion entlang der Längsachse einen Außenumfang aufweisen, innerhalb dessen das Membranmaterial kontinuierlich und flächig vorgesehen ist. Vorzugsweise sind in das Membranmaterial allerdings Schlitze oder Schnitte eingebracht, so daß die Membran eine Mehrzahl Materialstreifen aufweist, die sich quer zur Umfangsrichtung um die Längsachse erstrecken.

Um eine möglichst geradlinige Führung der Taststifthalterung relativ zum Chassis zu erreichen, ist die wirksame Länge der Membran möglichst groß. Hierzu erstreckt sich die Membran vorzugsweise ausgehend von dem Ort, an dem sie am Chassis festgelegt ist, zur Längsachse und darüber hinaus bis zu dem Ort, an dem sie an einer an der Taststifthalterung vorgesehenen Membranhafterung festgelegt ist. Vorzugsweise ist die wirksame Länge der Membran wenigstens 1,2mal, stärker bevorzugt wenigstens 1,5mal größer als der Abstand zwischen dem Tastkopfchassis und der Längsachse im Bereich der Membran.

Die Federanordnung bestimmt die Ruhelage der Taststifthalterung bezüglich des Tastkopfchassis vorzugsweise sowohl in Längsrichtung als auch quer hierzu. Hierbei ist eine Ausbildung der Federanordnung als Spiralfeder oder Schraubenfeder bevorzugt, wobei die Spiral- bzw. Schraubenfeder einerseits an dem Tastkopfchassis und andererseits an der Tastspitzenhalterung festgelegt ist.

Gemäß einer bevorzugten Ausgestaltung stellt auch die Membrananordnung einen Teil der Federkraft bereit, die den Taststift in Längsrichtung in seiner Ruhelage hält. Es sind dann in der Ruhelage die Federanordnung und die Membran gegeneinander vorgespannt.

Vorzugsweise wird jedoch die Federkraft zur Definition der Ruhelage in Längsrichtung hauptsächlich durch die Federanordnung und in möglichst geringem Umfang durch die Membran bereitgestellt.

Weiter geht die Erfindung von einem Tastkopf mit einem an dem Koordinatenmeßgerät anbringbaren Tastkopfchassis, einer an dem Tastkopfchassis aus einer Ruhelage auslenkbar gehalterten Taststifthalterung mit einer Längsachse und einem Auslenkungsmeßsystem zur Erfassung einer Auslenkung der Taststifthalterung bezüglich des Tastkopfchassis aus. Das Auslenkungsmeßsystem umfaßt eine Mehrzahl von Abstandssensoren, von denen ein jeder einerseits eine an der Taststifthalterung festgelegte Sensorkomponente und andererseits eine an dem Tastkopfchassis festgelegte Sensorkomponente umfaßt.

Die an dem Tastkopfchassis festgelegten Sensorkomponenten sind in Umfangsrichtung um die Längsachse verteilt angeordnet und von den Abstandssensoren weist wenigstens einer eine taststifthalterungseitige Komponente auf, die mit Abstand in Längsrichtung von der zugehörigen chassisseitigen Sensorkomponente angeordnet ist.

Hierdurch bilden die mehreren Abstandssensoren gemeinsam ein Auslenkungsmeßsystem, welches die Erfassung der Auslenkung der Tastkopfhalterung aus der Ruhelage in deren drei räumlichen Freiheitsgraden ermöglicht. Es ist dabei nicht für jeden der räumlichen Freiheitsgrade ein separater Abstandssensor vorgesehen, vielmehr beeinflußt eine jede Auslenkung der Taststifthalterung immer mehrere Abstandssensoren, wobei allerdings die von den Abstandssensoren bereitgestellten Meßsignale derart miteinander verrechnet werden können, daß die tatsächliche Auslenkung aus der Ruhelage als Absolutwert bestimmbar ist.

Hierzu sind wenigstens zwei Abstandssensoren notwendig. Vorzugsweise sind jedoch drei oder mehrere Abstandssensoren vorgesehen, welche dann, weiter bevorzugt, gleichmäßig verteilt um die Längsachse angeordnet sind.

Im Hinblick auf eine vorteilhafte Symmetrie zwischen den von den Abstandssensoren ausgegebenen Meßsignalen sind mehrere der an dem Tastkopfchassis vorgesehene Sensorkomponenten vorzugsweise in einer gemeinsamen Ebene angeordnet, die sich vorzugsweise orthogonal zur Längsachse der Tastkopfhalterung in deren Ruhelage erstreckt.

Im Hinblick auf eine einfache Ausgestaltung des Auslenkungsmeßsystemes und einfach auswertbare Signale der Abstandssensoren sind die an der Taststifthalterung vorgesehenen Sensorkomponenten vorzugsweise in eine einzige Komponente zusammengefaßt, das heißt es ist an der Taststifthalterung eine Sensorkomponente vorgesehen, welche für mehrere der Abstandssensoren die taststifthalterungseitige Komponente bildet.

Die taststifthalterungseitige Sensorkomponente ist vorzugsweise als Sender ausgebildet, welcher ein Signalfeld emittiert, welches von den mehreren chassisseitigen Sensorkomponenten empfangen wird. Hierbei ist beispielsweise die Empfangsintensität des Signalfeldes an den Orten der chassisseitigen Sensorkomponenten, das heißt den Empfängern, vom Abstand zum Sender abhängig, und über eine entsprechende Auswertung können dann der Ort, an dem der Sender an der Taststifthalterung festgemacht ist, relativ zum Chassis und damit auch die Auslenkung der Tastsfifthalterung aus ihrer Ruhelage bestimmt werden.

Aus den von dem Auslenkungsmeßsystem bereitgestellten Sensorsignalen ist die Auslenkung der Taststiftspitze aus der Ruhelage bestimmbar, sofern das System entsprechend kalibriert ist.

Demgemäß schlägt die Erfindung unter einem ersten Aspekt ein Verfahren zum Kalibrieren eines Koordinatenmeßgerätes vor gemäß Anspruch 1 vor. Es werden die von dem Auslenkungsmeßsystem bereitgestellten Meßsignalmuster registriert und in geeigneter Weise gespeichert. Treten solche Meßsignalmuster dann später während des Antastbetriebes an ein Werkstück auf, so kann aus dem Auftreten der Meßsignale auf die entsprechende Auslenkung aus der Ruhelage geschlossen werden.

Vorzugsweise wird der Meßkopf um eine Mehrzahl von jeweils verschiedenen Strecken verschiedener Länge und verschiedener Richtung verfahren, und zu einer jeden Strecke werden die zugehörigen Meßsignalmuster registriert. Hierdurch ist dann der Meßkopf bezüglich Auslenkungen in allen drei Raumrichtungen kalibrierbar.
Unter einem zweiten Aspekt stellt die Erfindung einen kalibrierkörper gemäß Anspruch 2 bereit. Vorzugsweise weist der Tastsfiftspitzenhalter eine Anlagefläche für die Spitze des Taststiftes sowie eine Kraftfeldquelle zur Bereitstellung einer Haltekraft auf, die die Taststiftspitze in Eingriff mit der Anlagefläche hält. Dies hat den Vorteil, daß zum einen eine wohldefinierte Anlagefläche für die Taststiftspitze bereitgestellt werden kann und zum anderen nach Eingriff zwischen Taststift und Taststiftspitzenhalter der Tastkopf in eine Richtung verfahren werden kann, die einen Zug des Taststiftes weg von dem Taststiftspitzenhalter erzeugt. Dadurch ist es möglich, Auslenkungen in Längsrichtung des Taststiftes in die beiden entgegengesetzten Richtungen zu kalibrieren.

Als Kraftfeldquelle ist ein Elektromagnet als eine Magnetfeldquelle vorgesehen. Der Elektromagnet hat dabei den Vorteil, daß der Eingriff zwischen Taststift und Taststiftspitzenhalter durch Abschalten des Elektromagneten einfach lösbar ist.

Um eine wohldefinierte Anlagefläche bereitzustellen, ist vorzugsweise ein Dreipunktkontakt für die Tastspitze durch die Anlagefläche bereitgestellt, was vorzugsweise durch drei nebeneinander angeordnete Kugelkalotten erfolgt.

Ebenfalls kann ein Greifer ausgebildet sein, um den Taststift oder eine Komponente hiervon nach Art einer Zange zu ergreifen.

Ausführungsformen der Erfindung werden nachfolgend anhand von Figuren näher erläutert. Hierbei zeigt:
- Figur 1: ein Koordinatenmeßgerät,
- Figur 2: einen Tastkopf zur Anbringung an einem Koordinatenmeßgerät in perspektivischer aufgeschnittener Darstellung,
- Figur 3: eine perspektivische Detaildarstellung des Tastkopfes der Figur 2,
- Figur 4: eine weitere perspektivische Detaildarstellung des Tastkopfes der Figur 2,
- Figur 5: eine schematische Erläuterung zur Funktion eines Auslenkungsmeßsystemes des Tastkopfes der Figur 2,
- Figur 6: eine elektrische Schaltung zum Betrieb des Auslenkungsmeßsystemes des Tastkopfes der Figur 2,
- Figur 7: eine schematische Darstellung einer Ausführungsform eines Kalibrierkörpers im Schnitt,
- Figur 8: den Kalibrierkörper der Figur 7 im Schnitt entlang einer Linie VIII-VIII der Figur 7,
- Figur 9: eine schematische Darstellung eines Teils einer Steuerung für das Koordinatenmeßgerät der Figur 1,
- Figur 10: eine Variante einer Membranfeder des Tastkopfes der Figur 2,
- Figur 11: eine weitere Variante der Membranfeder des Tastkopfes der Figur 2 und
- Figur 12: einen anderen Tastkopf zur Anbringung an einem Koordinatenmeßgerät.

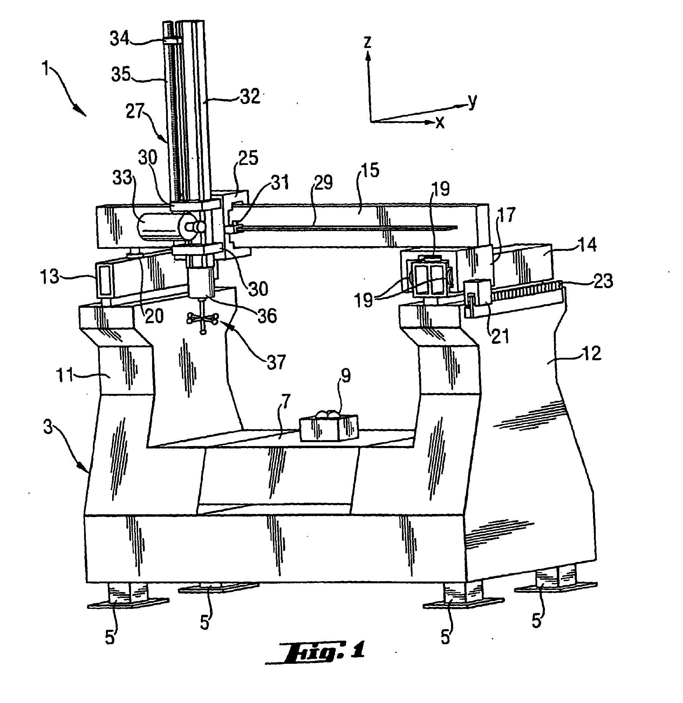

Figur 1 zeigt ein Koordinatenmeβgerät 1 in perspektivischer Darstellung. Dieses Koordinatenmeßgerät entspricht in seinem Grundaufbau dem in Dokument DE 198 21 274 A1 beschriebenen Koordinatenmeßgerät. Das Koordinatenmeßgerät 1 umfaßt einen Sockel 3 mit vier Standfüßen 5. Der Sockel 3 trägt in seiner Mitte eine Werkstückhalterung 7, auf der ein zu vermessendes Werkstück anbringbar ist, wobei in Figur 1 auf dem Werkstückhalter gerade ein Kalibrierkörper 9 zum Kalibrieren des Koordinatenmeßgerätes angeordnet ist.

Beidseits der Werkstückhalterung erstrecken sich an dem Sockel 3 Streben 11, 12 nach oben, welche zwei beidseits der Werkstückhalterung angeordnete in einer horizontalen y-Richtung und parallel zueinander sich erstreckende Längsführungen 13, 14 tragen. In Horizontalrichtung senkrecht (x-Richtung) zu den Längsführungen 13, 14 erstreckt sich eine Querführung 15, welche an den Längsführungen 13, 14 in y-Richtung verschiebbar gelagert ist Hierzu ist an einem Ende der Querführung 15 ein Führungsprofil 17 vorgesehen, welches die Längsführung 14 von oben U-förmig umgreift und an welchem mehrere Luftkissen 19 vorgesehen sind, mit denen die Querführung 15 an der Längsführung 14 abgestützt ist. Mit ihrem anderen Ende ist die Querführung 15 mit einem weiteren Luftkissen 20 auf der Oberseite der Längsführung 17 abgestützt und damit auch gegenüber dieser in y-Richtung verschiebbar gelagert. Durch einen motorischen Antrieb kann die Querführung 15 entlang der Längsführung 14 verschoben werden, wobei eine entsprechende Verschiebestellung über einen an dem Sockel 3 festgelegten Maßstab 23 und einen zugehörigen an dem U-Profil 17 festgelegten Sensor 21 abgelesen wird.

An der Querführung 15 ist über ein Führungsprofil 25 eine Vertikalführung 27 in x-Richtung verschiebbar gelagert, wobei die Verschiebestellung wiederum über einen an der Querführung 15 angebrachten Maßstab 29 und einen an dem Profil 25 festgemachten Sensor 31 abgelesen wird.

An dem Führungsprofil 25 sind zwei weitere mit Abstand voneinander angeordnete Führungsprofile 30 vorgesehen, welche eine sich in senkrechter Richtung (z-Richtung) erstreckende Stange 32 über einen Motor 33 verschiebbar lagern. Die Verschiebestellung der Stange 37 in z-Richtung wird über einen an der Stange 32 vorgesehenen Sensor 34 erfaßt, der die Position an einem an der Vertikalführung 27 vorgesehenen Maßstab 35 abliest.

An einem unteren Ende der Stange 31 ist ein Tastkopf 36 angebracht, welcher einen Taststift 37 mit mehreren Tastspitzen zum Antasten eines auf der Werkstückhalterung angebrachten Werkstückes 9 zeigt.

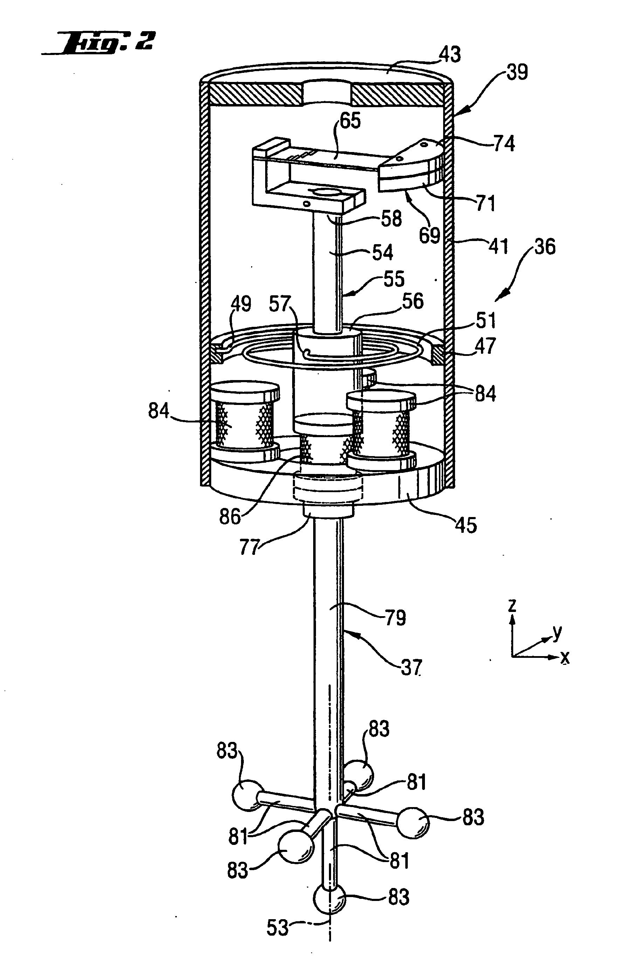

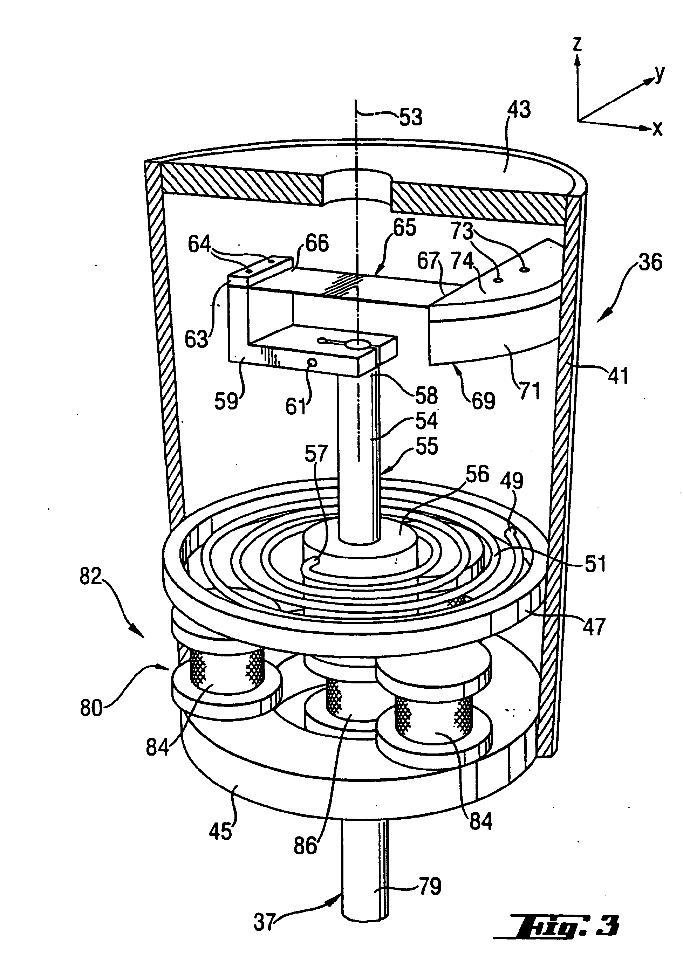

Der Tastkopf 36 ist in den Figuren 2, 3 und 4 im Detail dargestellt. Er umfaßt ein Gehäuse bzw. Chassis 39 mit einem zylindrischen Mantel 41, einem oberen Deckel 43 und einem unteren Deckel 45. In einem mittleren Bereich des Mantels 41 ist an dessen Innenwand ein Ring 47 befestigt, an dem ein radial äußeres Ende 49 einer Spiralfeder 51 befestigt ist. Die Spiralfeder 51 erstreckt sich in der Horizontalebene (x-y) mit mehreren Windungen um eine Längsachse 53 einer Taststifthalterung 55 nach radial innen, wobei die Spiralfeder 51 mit ihrem anderen radial inneren Ende 57 an einem in Längsrichtung 53 mittleren Bereich 56 der Taststifthalterung 55 befestigt ist. Die Spiralfeder 51 hält die Taststifthalterung 55 bezüglich dem Gehäuse 39 in der in den Figuren dargestellten Ruhestellung, wobei sie eine Federkraft bereitstellt, die die Taststifthalterung bei Auslenkungen ihres mittleren Bereiches 56 in die gezeigte Ruhestellung zurückdrängt, wobei die entsprechenden Rückstellkräfte in z-Richtung, x-Richtung und y-Richtung wirken.

Von dem mittleren Bereich 56 der Taststifthalterung 55 erstreckt sich eine Stange 54 nach oben, an deren oberem Ende 58 ein Winkelteil 59 mittels einer Schraube 61 festgeklemmt ist. Das Winkelteil 59 erstreckt sich ausgehend von dem oberen Ende der Stange 54 entgegen der x-Richtung zunächst zu dem Gehäusemantel 41 hin und sodann, ohne das Gehäuse zu berühren, in z-Richtung nach oben. Am oberen Ende des Winkelteiles 59 ist mittels eines Klötzchens 63 und Schrauben 64 eine Blattfeder 65 mit ihrem einen Ende 66 derart eingespannt, daß sie sich ausgehend von dem oberen Ende des Winkelteiles 59 in x-Richtung zurück zu der Längsachse 53 hin, über diese hinaus zu dem Gehäusemantel 41 hin erstreckt. Mit ihrem anderen Ende 67 ist die Blattfeder 65 in einer Halterung 69 eingespannt, die an dem Mantel 41 des Gehäuses 39 festgelegt ist. Hierzu weist die Halterung 69 ein an dem Mantel befestigtes Unterteil 71 sowie ein mittels Schrauben 73 gegen das Unterteil 71 gepreßtes Oberteil 74 auf, wobei das Federende 67 zwischen Unterteil 71 und Oberteil 74 eingespannt ist.

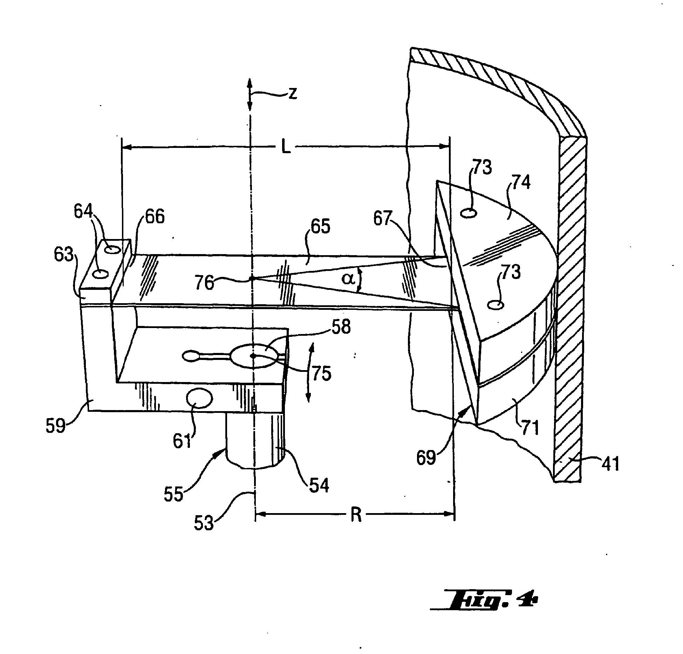

In Figur 4 ist ein Durchstoßpunkt 76 der Längsachse 53 durch die Blattfeder 65 dargestellt. In Figur 4 ist ferner ein Umfangswinkel α dargestellt, der angibt, über welchen Umfang um die Längsachse 53 die Blattfeder 65 auf Seiten des Gehäuses 39 eingespannt ist. In der dargestellten Anordnung beträgt dieser Winkel etwa 15°, die Blattfeder 65 ist also lediglich an einem kleinen Teil des Umfangs des Gehäuses 39 um die Längsrichtung 53 festgelegt.

Wie am besten aus Figur 4 ersichtlich ist, stellt die Blattfeder 65 für das obere Ende 58 der Taststifthalterung 55 eine Führung bereit, die eine Verlagerung des oberen Endes 58 in Richtung eines Pfeiles 75, der sich in etwa in z-Richtung erstreckt, leichtgängig erlaubt und andererseits Verlagerungen des oberen Endes 58 in einer Ebene senkrecht zur Richtung 75 praktisch nicht ermöglicht. Diese Art der Führung liegt an der Eigenschaft der Blattfeder 65 in einer Richtung senkrecht zu ihrer Membranebene (z-Richtung) flexibel zu sein und in den Richtungen einer senkrecht hierzu orientierten Ebene im wesentlichen starr ausgebildet zu sein. Bei der in Figur 4 dargestellten Anordnung der Blattfelder fällt die Richtung 75 wenigstens bei kleinen Auslenkungen in z-Richtung im wesentlichen mit der Längsachse 53 bzw. z-Richtung zusammen, wobei allerdings das obere Ende 58 der Taststifthalterung 55 durch die Blattfeder 65 entlang einer gekrümmten Bahn geführt wird. Die Krümmung dieser Bahn ist allerdings vergleichsweise groß und durch die volle Länge L der Blattfeder 65, das heißt den Abstand zwischen ihren in der Halterung 69 und an dem Winkelstück 59 eingespannten Enden 67, 66, bestimmt. Damit ist die Krümmung insbesondere größer als die eines Kreises, der einen Radius R aufweist, der dem Abstand zwischen dem an der Halterung 69 eingespannten Ende 67 der Blattfeder 65 und der Längsachse 53 entspricht.

An einem unteren Ende 77 der Taststifthalterung 55 ist in diese ein Schaft 79 des Taststiftes 37 derart eingeschraubt, daß sich auch der Schaft 79 auf der Längsachse 53 der Taststifthalterung 55 erstreckt. An einem unteren Ende des Schaftes 79 sind an diesem wiederum fünf Zweigschäfte 81 befestigt, welche sich in die Richtungen -z, +x, -x, +y und -y von dem unteren Ende des Schafts 79 weg erstrecken. Ein jeder Zweigschaft 81 trägt an seinem Ende eine Rubinkugel 83, welche zum Kontakt mit dem zu vermessenden Werkstück vorgesehen ist und damit eine Taststiftspitze bildet.

Wird der Tastkopf 36 von oben an ein Werkstück angenähert und in Kontakt mit dem Werkstück gebracht, so sind die Bewegungsfreiheitsgrade dieser Kugel durch die Werkstückoberfläche beschränkt, und eine weitere Bewegung des Tastkopfes durch das Koordinatenmeßgerät relativ zu dem Werkstück führt zu einer Auslenkung der berührenden Kugel 83 bezüglich des Tastkopfgehäuses 39. Zusammen mit der Kugel 83 werden der Taststift 37 und der Taststifthalter 55 relativ zu dem Gehäuse 39 ausgelenkt, da diese zusammen ein starres System bilden. Die Auslenkung der Kugel 83 in Horizontalrichtung (x-, y-Richtungen) führt zu einem Verschwenken des Systems aus Taststift 37 und Taststifthalter 55 um das obere Ende 58 des Tastsfifthalters 55, da dieses obere Ende 58 aufgrund der Starrheit der Feder 65 in diese Richtungen nicht auslenkbar ist. Eine Auslenkung der Kugel 83 bezüglich des Gehäuses 39 in z-Richtung führt zu einer Verlagerung des oberen Endes 58 der Taststifthalterung 55 in Richtung 75, die in etwa mit der z-Richtung zusammenfällt.

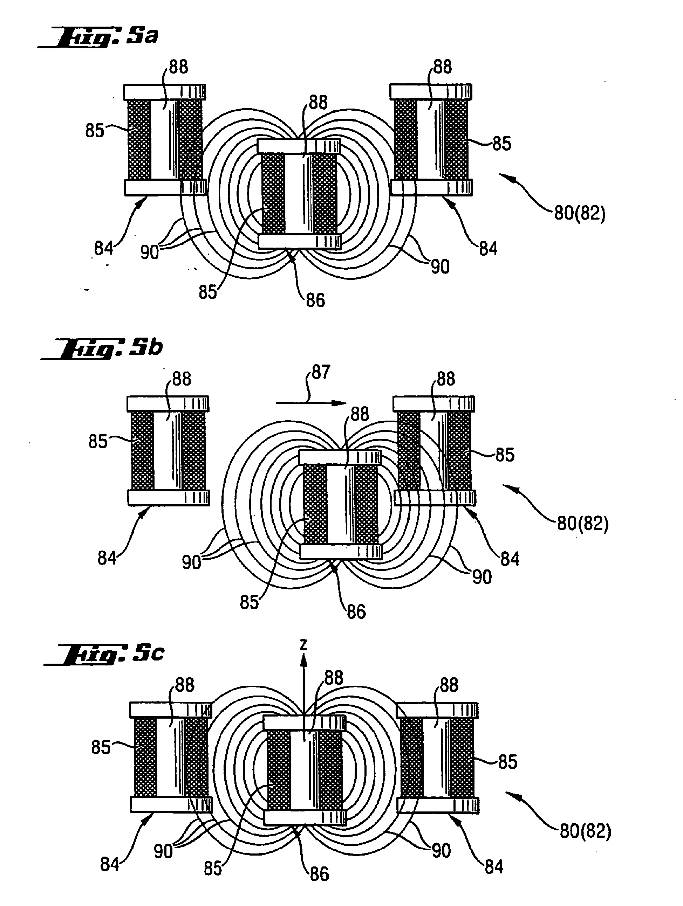

Die Auslenkungen der Kugel 83 in den drei Raumrichtungen führen damit ebenfalls zu Auslenkungen in drei Raumrichtungen des mittleren Bereiches 56 der Taststifthalterung 55 relativ zu dem Gehäuse 41. Diese Auslenkungen werden von einem Auslenkungsmeßsystem 80 erfaßt, welches einen Satz 82 aus drei Abstandssensoren umfaßt. Ein jeder Abstandssensor weist eine Komponente 84 auf Seiten des Gehäuses 39 und eine Komponente 86 auf Seiten der Taststifthalterung 55 auf. Hierbei sind die taststifthalterungsseitigen Komponenten der drei Abstandssensoren in einer einzigen Komponente zusammengefaßt, nämlich einer elektromagnetischen Sendespule, die eine auf einen Wickelkern 88 aufgewickelte StromleiterWicklung 85 umfaßt (vgl. Figur 5). Die Komponenten 84 der drei Abstandssensoren, die auf Seiten des Gehäuses 39 angeordnet sind, sind durch drei elektromagnetische Empfängerspulen gebildet, von denen eine jede ebenfalls eine auf einen Kern 88 aufgebrachte Wicklung 85 aufweist. Die gehäuseseitigen Spulen 84 sind auf dem unteren Gehäusedeckel 45 in einer gemeinsamen Ebene und gleichmäßig um die Längsachse 53 verteilt angeordnet. Die taststifthalterungsseitige Sendespule 86 ist zentral zur Längsachse 53 und dabei mit vertikalem Abstand unterhalb der Ebene der Empfängerspulen 84 angeordnet.

Das Funktionsprinzip des Auslenkungsmeßsystemes 80 ist anhand der Figuren 5a bis 5c erläutert. Figur 5a zeigt eine Situation, in der sich der Tastsfifthalter 55 in seiner Ruhelage bezüglich des Gehäuses 39 befindet. Die Sendespule 86 emittiert ein elektromagnetisches Feld, dessen Feldlinien in Figur 5 mit 90 bezeichnet sind und dessen Intensität mit zunehmendem Abstand von der Sendespule 86 abnimmt. Dieses emittierte Feld wird von den Empfängerspulen 84 empfangen, wobei die Empfangsstärke ebenfalls von dem Abstand zwischen Sendespule 86 und der entsprechenden Empfangsspule 84 abhängt. In Figur 5a ist die Sendespule 86 mittig zwischen den Empfängerspulen 84 angeordnet, so daß sämtliche Empfängerspulen 84 eine im wesentlichen gleiche Feldintensität registrieren und entsprechend im wesentlichen gleiche Meßsignale abgeben.

In Figur 5b ist eine Situation dargestellt, in der der Taststift 37 aus seiner Ruhelage horizontal ausgelenkt ist. Dies führt, im Vergleich zu der in Figur 5a gezeigten Situation, zu einer horizontal in Richtung eines Pfeils 87 verlagerten Sendespule 86, mit der Folge, daß wenigstens eine der drei Empfängerspulen 84 eine erhöhte Feldintensität registriert und wenigstens eine andere der drei Empfängerspulen 84 eine erniedrigte Feldstärke registriert. Aus dem Unterschied der von den einzelnen Empfängerspulen 84 registrierten Intensitäten kann damit die horizontale Auslenkung des Taststiftes 37 sowohl hinsichtlich ihrer Richtung als auch ihres Betrages bestimmt werden.

Figur 5c zeigt eine Situation, in der, im Vergleich zu der Figur 5a, der Taststift in z-Richtung nach oben verlagert ist. Dies führt gegenüber der Figur 5a zu einer Erhöhung der registrierten Feldintensitäten von sämtlichen Empfängerspulen 84, da die Sendespule 86 und sämtliche Empfängerspulen 84 gleichmäßig einander angenähert sind. Umgekehrt würde eine Auslenkung des Taststiftes 37 nach unten (-z-Richtung) zu einer Verringerung der von sämtlichen Empfängerspulen 84 registrierten Feldintensitäten führen. Somit kann durch Auswertung einer Summe oder eines Mittelwertes der von den Empfängerspulen 84 registrierten Intensitäten die Auslenkung des Taststiftes in z-Richtung ermittelt werden, und durch Auswertung von Differenzen der von den Spulen 84 empfangenen Intensitäten kann die Auslenkung des Taststiftes 37 in Horizontalrichtung erfaßt werden.

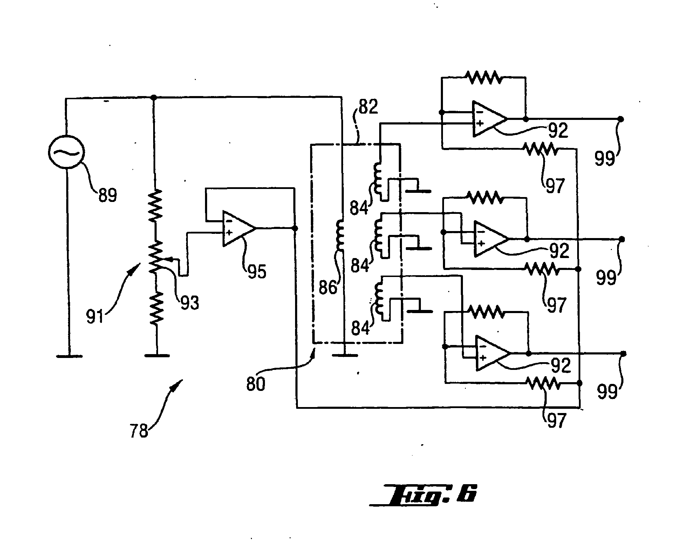

Figur 6 zeigt schematisch eine vereinfachte Schaltung 78 des Auslenkungsmeßsystems 80 zum Betrieb der Abstandssensoren 82. Die Sendespule 86 wird von einer Hochfrequenzspannungsquelle 89 gespeist, so daß sie das elektromagnetisches Wechselfeld 90 emittiert. Die durch das Hochfrequenzfeld 90 in den Empfängerspulen 84 induzierte Spannung wird jeweils einem nicht invertierenden Eingang eines Verstärkers 92 zugeführt. Einem invertierenden Eingang eines jeden Verstärkers 92 wird eine Spannung zugeführt, die der Erregungsspannung der Sendespule 81 entspricht. Die den invertierenden Eingängen der Verstärker 92 zugeführten Spannungen werden gewonnen, indem an einem parallel zu der Hochfrequenzspannungsquelle 89 geschalteten Spannungsteiler 91 mit Potentiometer 93 eine Spannung abgegriffen wird, diese einem Spannungsfolger 95 zugeführt wird und dessen Ausgabe über Widerstände 97 an die jeweiligen invertierenden Eingänge der Verstärker 92 geführt wird. Die Ausgaben der drei Verstärker 92 werden an drei Anschlüssen 99 bereitgestellt.

In einer Ruhelage des Taststiftes 37 wird das Potentiometer 93 derart eingestellt, daß die an den einzelnen Anschlüssen 99 ausgegebenen Spannungen minimal sind und insbesondere nahezu Null sind. Sodann führt eine jede Änderung der Abstandsbeziehung zwischen der Sendespule 86 und den Empfängerspulen 84 zu Änderungen der an den Anschlüssen 99 ausgegebenen Spannungen in die eine oder in die andere Richtung, woraus die Größe der Auslenkung nach der in Zusammenhang mit den Figuren 5a bis 5c erläuterten Weise erfolgen kann.

Da die Änderung der an den Anschlüssen 99 ausgegebenen Signale in Abhängigkeit von der Auslenkung der Tastspitze zwar prinzipiell berechenbar ist, allerdings von vielen Parametern abhängt, ist es vorteilhaft, das Auslenkungsmeßsystem zu kalibrierten, das heißt gezielt bekannte Auslenkungen herbeizuführen und in Abhängigkeit von einer jeden bekannten Auslenkung die an den Anschlüssen 99 ausgegebenen Meßsignale aufzuzeichnen. Umgekehrt kann dann während des Betriebes aus dem Auftreten eines ausgegebenen Meßsignalmusters auf die zugehörige Auslenkung geschlossen werden.

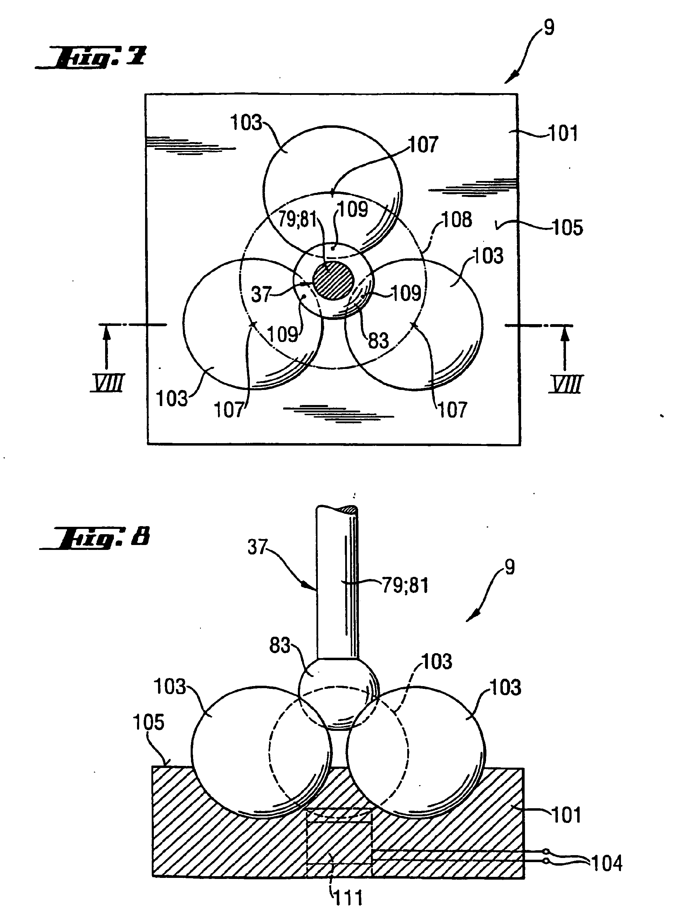

Hierzu wird eine der Tastspitzen 83 in Eingriff mit dem in den Figuren 7 und 8 im Detail gezeigten Kalibrierkörper 9 gebracht. Der Kalibrierkörper 9 umfaßt einen Basisblock 101, in den drei gleich große Kugeln 103 derart eingebettet sind, daß sie an einer Oberseite 105 des Blockes 101 vorstehen. In der Draufsicht der Figur 7 sind die Mittelpunkte 107 der drei Kugeln 103 auf einem Kreis 108 gleichmäßig verteilt angeordnet.

Der Durchmesser der Kugeln 103 und deren Abstand voneinander ist so auf den Durchmesser der Rubinkugel 83 des Taststiftes 37 angepaßt, daß die Rubinkugel 83, wenn sie von oben in das Zentrum zwischen den Kalibrierkörperkugeln 103 bewegt wird, an allen drei Kugeln zur Anlage kommt, und zwar an Anlagepunkten, die in der Projektion der Figur 7 mit den Bezugszeichen 109 bezeichnet sind.

In dem Sockel 101 ist ferner zentral ein Elektromagnet 111 vorgesehen, dem über Anschlußdrähte 104 dann Strom zugeführt wird, wenn die Tastspitze 83 in Anlagekontakt mit den Kalibrierkörperkugeln 103 steht. Der Elektromagnet 101 erzeugt ein Magnetfeld, welches den Schaft 79, der einen entsprechenden Eisenanteil aufweist, nach unten zieht und auch dann, wenn Zugkräfte nach oben auf den Schaft 79 wirken, die Tastspitze 83 in Anlagekontakt an den Kalibrierkörperkugeln 103 in den Punkten 109 hält.

Bei derart festgehaltener Tastspitze 83 wird der Tastkopf 36 durch Betätigung des Koordinatenmeßgerätes 1 um vorbestimmte Strecken verfahren, und es werden die dem Verfahrstrecken zugehörigen Signalmuster an den Anschlüssen 99 abgegriffen und gespeichert. Durch Untersuchung der Signalmuster in Abhängigkeit von den Verfahrstrecken ist der Tastkopf 36 und sein Auslenkungsmeßsystem 80 somit kalibrierbar. Insbesondere sind mit diesem Kalibrierkörper 9 auch Auslenkungen des Taststiftes 37 in negativer z-Richtung kalibrierbar, wie sie im Betrieb dann auftreten, wenn mit den Tastspitzen 83, die an den sich horizontal erstreckenden Zweigstiften 81 angeordnet sind, Hohlräume ausgetastet werden.

Soll nach der Kalibrierung ein Werkstück angetastet werden, so wird zunächst die Zuführung des Stromes über die Anschlüssen 104 an den Elektromagneten 101 eingestellt, es wird sodann die Tastspitze 83 von dem Kalibrierkörper 9 weg bewegt, woraufhin der Kalibrierkörper 9 von der Werkstückhalterung 7 entfernt und durch ein zu vermessendes Werkstück ersetzt werden kann.

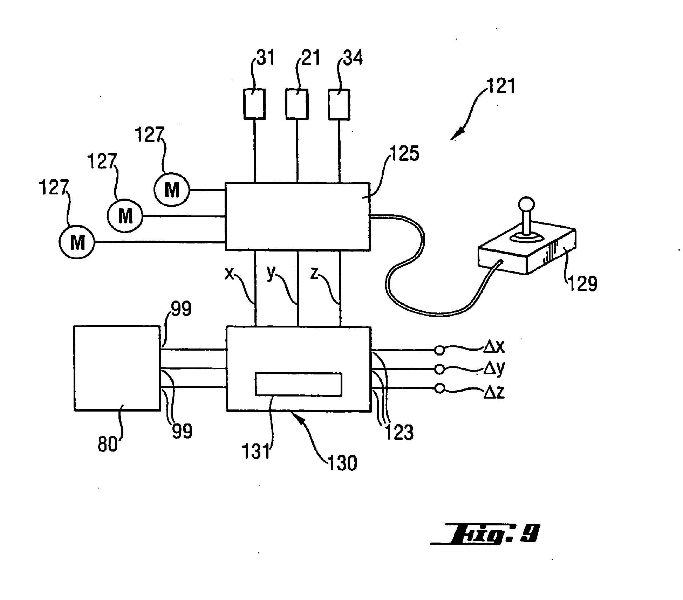

Figur 9 zeigt schematisch einen Teil einer Steuerung 121 des Koordinatenmeßgerätes 1, welche an den Ausgängen 123 Signale bereitstellt, welche die Auslenkung der Tastspitze 83 als Koordinaten Δx, Δy und Δz angeben. Der Steuerungsteil 121 umfaßt eine Positionierungskomponente 125, welche zum einen die Motoren 127 zum Verfahren des Meßkopfes in den drei Raumkoordinaten ansteuert, wobei das Verfahren des Meßkopfes 36 entweder durch Betätigung eines Bedienpults 129 durch einen Benutzer erfolgen oder auch durch ein in der Komponente 125 gespeichertes Programm vorgegeben sein kann. Andererseits liest die Komponente 125 auch die Sensoren 31, 21 und 34 ab, um die Position des Tastkopfes 36 bezüglich des Werkstückhalters 7 in den drei Raumkoordinaten x, y und z eines wählbaren Koordinatensystems zu bestimmen. Diese drei Koordinaten x, y und z werden von der Komponente 125 an eine Tastkopfkalibrierkomponente 130 übergeben, welche ebenfalls die von der Schaltung 78 an den Anschlüssen 99 (vgl. Figur 6) ausgegebenen Signale der Abstandssensoren des Auslenkungsmeßsystems 80 einliest. Die Kalibrierkomponente 130 umfaßt auch einen Speicher 131 zum Speichem von Signalmustern der Abstandssensoren in Abhängigkeit von Verfahrwegen.

Zur Kalibrierung des Auslenkungsmeßsystems 80 geht die Steuerung 121 wie folgt vor: Zunächst ist die Tastspitze 83 in ihrer Ruhelage, das heißt in keinem Kontakt mit einem Werkstück. Das dann an den Anschlüssen 99 ausgegebene Signalmuster wird in dem Speicher 131 gespeichert. Sodann bringt der Benutzer durch Betätigen des Schaltpults 129 die Tastspitze in den im Zusammenhang mit den Figuren 7 und 8 beschriebenen Kontakt mit dem Kalibrierkörper 9 und betätigt auch die Stromzuführung 104 an den Elektromagneten 111, um die Tastspitze 83 in Kontakt mit dem Kalibrierkörper 9 zu halten. Sodann läuft in der Steuerung 121 ein vorbestimmtes Kalibrierprogramm ab. Da das Ineingriffbringen von Tastspitze 83 und Kalibrierkörper bereits zu einer Auslenkung der Tastspitze 83 aus der Ruhelage geführt haben kann, betätigt die Steuerung 125 die Motoren 127 iterativ so lange, bis an den Ausgängen 99 wieder das in dem Speicher 131 gespeicherte Signalmuster ausgegeben wird, welches der Ruhelage der Tastspitze 83 entspricht. Die in diesem Zustand von der Komponente 125 ausgegebenen Werte x, y, z werden als Werte x₀, y₀, z₀ ebenfalls in dem Speicher 131 gespeichert. Sodann werden die Motoren 127 betätigt, um den Meßkopf um eine kleine Strecke in eine neue Position x, y, z zu verfahren. Dies führt zu einer Auslenkung Δx = x - x₀, Δy = y - y₀, Δz = z - z₀ der Tastspitze 83 aus ihrer Ruhelage. In dem Speicher 131 wird dann das an den Anschlüssen 99 ausgegebene Signalmuster zusammen mit Δx, Δy und Δz gespeichert. Dieser Vorgang wird für eine Vielzahl von Verfahrstrecken bzw. Auslenkungen Δx,
Δy, Δz wiederholt und daraufhin das Kalibrierverfahren beendet.

Treten im Meßbetrieb Auslenkungen der Tastspitze 83 aus ihrer Ruhelage auf, so wird von der Komponente 130 das an den Anschlüssen 99 ausgegebene Signalmuster des Auslenkungsmeßsystems 80 untersucht. Entspricht das Signalmuster einem in dem Speicher 131 vorhandenen Signalmuster, so werden die zusammen mit diesem Muster gespeicherten Auslenkungen Δx, Δy, Δz als Auslenkungen der Tastspitze 83 aus der Ruhelage an den Anschlüssen 123 ausgegeben. Entspricht das im Betrieb auftretende Signalmuster an den Anschlüssen 99 nicht exakt einem bereits in dem Speicher 131 gespeicherten Muster, so werden zwei oder mehrere Muster aus dem Speicher ausgewählt, die dem gerade auftretenden Muster am nächsten kommen, und es wird eine Interpolation zwischen diesen nahekommenden Mustern und den zusammen mit ihnen gespeicherten Auslenkungen Δx, Δy, Δz durchgeführt, um dann die aktuelle interpolierte Auslenkung als Auslenkungen der Tastspitze 83 aus der Ruhelage an den Anschlüssen 123 auszugeben.

Nachfolgend werden Varianten der in den Figuren 1 bis 9 erläuterten Anordnungen dargestellt. Hinsichtlich ihres Aufbaues und ihrer Funktion einander entsprechende Komponenten sind mit den Bezugszahlen aus den Figuren 1 bis 9 bezeichnet, zur Unterscheidung jedoch mit einem zusätzlichen Buchstaben versehen. Zur Erläuterung wird auf die gesamte vorangehende Beschreibung jeweils Bezug genommen.

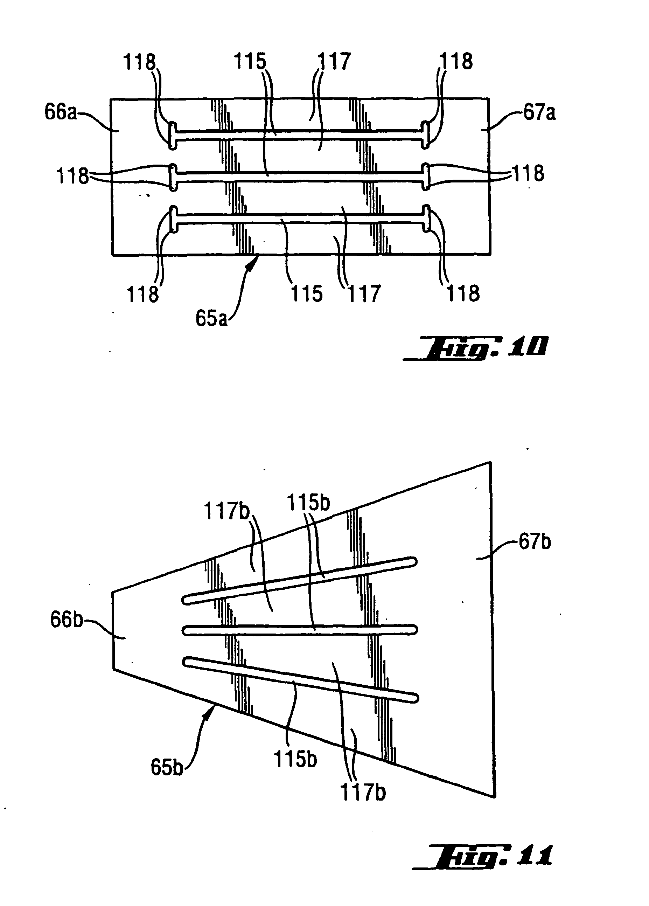

Figur 10 zeigt eine Variante einer Blattfeder 65a, wie sie zur Bereitstellung der Führung zwischen dem oberen Ende der Taststifthalterung und dem Gehäuse des Tastkopfes eingesetzt werden kann. Die Blattfeder 65a ist nicht wie die in den Figuren 2, 3 und 4 dargestellte Blattfeder aus einem kontinuierlichen Membranmaterial gebildet, sondern weist in Längsrichtung sich erstreckende Schlitze 115 auf, die einzelne Streifen 117 von Membranfedermaterial voneinander trennen. Die Schlitze 115 erstrecken sich in Längsrichtung der Feder 65a nicht bis zu deren Enden 66a und 67a, so daß an den Enden 66a, 67a ein quer zur Erstreckungsrichtung der Streifen 117 verlaufender kontinuierlicher Materialsteg verbleibt, an dem die Feder 65a in ihre Halterungen auf Seiten des Gehäuses und auf Seiten der Taststifthalterung eingespannt werden kann. Die Schlitze 115 sind an ihren Enden T-förmig verbreitert und weisen somit an den Enden quer zur Schlitzrichtung sich erstreckende Zweigschlitze 118 auf. Die Schlitze 117 können allerdings auch ohne die Zweigschlitze 118 ausgeführt sein. Die durch die Membranstreifen 117 erzeugte Führungswirkung der Blattfeder begünstigt eine präzise und reproduzierbare Verschwenkung des Taststifthalters um eine Schwenkachse, die sich in den Figuren 2 bis 4 in etwa in x-Richtung erstreckt.

Figur 11 zeigt, ähnlich wie Figur 10, eine weitere Variante einer Blattfeder 65b. Bei der Blattfeder 65b ist ein Ende 67b, welches zur Einspannung auf Seiten des Gehäuses vorgesehen ist, breiter ausgeführt als ein Ende 66b, welches zur Einspannung an dem Taststifthalter vorgesehen ist. Auch die Blattfeder 65b weist Schlitze 115b auf, die entsprechende Materialstreifen 117b voneinander trennen. Im Unterschied zur Figur 11 verlaufen die Schlitze 115b bzw. Streifen 117b nicht parallel zueinander sondern mit zu dem Ende 67b hin kontinuierlich zunehmendem Abstand voneinander.

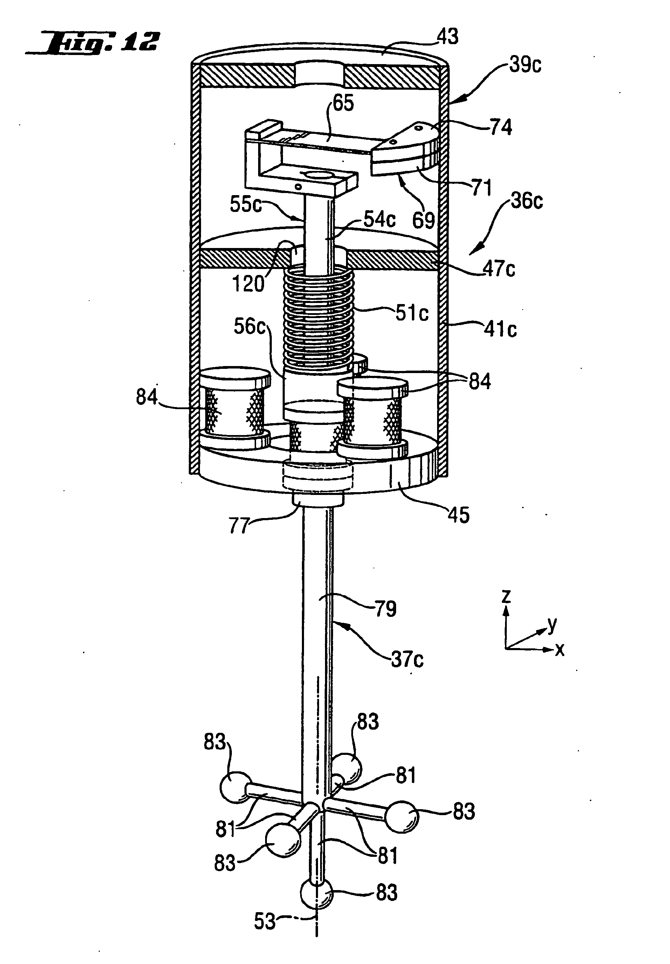

Figur 12 zeigt einen anderen Tastkopf 36c, der dem in den Figuren 2 bis 4 dargestellten Tastkopf weitgehend ähnlich ist. Allerdings unterschieden sich diese Tastköpfe in der Ausbildung der Federanordnung zur Rückstellung eines Taststiftes 37c. Während in den Figuren 2 bis 4 die Rückstellung in die Ruhelage durch eine Spiralfeder erfolgt, erfolgt dies bei dem Tastkopf 36c durch eine mit mehreren Windungen um die Längsachse verlaufende Schraubenfeder 51c, die einerseits an einem zentralen Bereich 56c einer Taststifthalterung 55c befestigt ist und andererseits, mit ihrem in z-Richtung oberen Ende an einer Scheibe 47c, die durch einen Gehäusemantel 41c horizontal im Inneren des Gehäuses 39c gehalten ist und die eine zentrale Ausnehmung 120 aufweist, und den Durchtritt eines Schaftes 54c der Taststifthalterung 55c ermöglicht. Auch die Schraubenfeder 51c erfüllt die Funktion, den Taststift 37c sowohl in z-Richtung als auch in Horizontalrichtung in seiner Ruhelage zu halten und gegenüber Auslenkungen aus der Ruhelage eine entsprechende Rückstellkraft bereitzustellen.

Es ist ebenfalls möglich, die Federeinrichtung zur Rückstellung in die Ruhelage durch eine Schraubenfeder, wie sie in Figur 11 dargestellt ist, kombiniert mit einer Spiralfeder, wie sie in den Figuren 2 bis 4 dargestellt ist, bereitzustellen. Es ist durch die Kombination von Schrauben- und Spiralfeder noch besser möglich, Kennlinien der Rückstell-kraft in Abhängigkeit von der Auslenkungsrichtung auf eine gewünschte Federwirkung einzustellen. Es ist auch möglich, den Taststifthalter durch jegliche andere denkbare Art von Federanordnung in seiner Ruhelage bezüglich des Gehäuses zu halten. Beispielsweise kann dies durch eine Vielzahl über den Umfang um die Längsachse verteilt angeordneter Radialfedem oder ähnliches erfolgen.

Ferner ist es möglich, anstatt des Auslenkungsmeßsystemes, welches vorangehend durch drei Abstandssensoren beschrieben wurden, durch jegliches anderes Auslenkungsmeßsystem zu ersetzen. Ebenso ist es möglich, das vorangehende Auslenkungsmeßsystem mit mehreren Abstandssensoren auch an Tastköpfen einzusetzen, bei denen die Taststifthalterung nicht über eine Führung und eine mit Abstand zu der Führung angeordnete Feder an den Tastkopfchassis gehaltert ist. Ferner ist es auch möglich, das beschriebene Verfahren zum Kalibrieren eines Tastkopfes sowie den Kalibrierkörper für jegliche andere Art von Tastkopf einzusetzen.

Auch ist es möglich, die Tastspitze oder einen Schaft des Taststiftes durch einen Greifer in der Ruhelage zu halten, während die Kalibrierung durchgeführt wird.

Die Offenbarung umfaßt unter anderem folgende Gegenstände:
Gegenstand 1: Ein Tastkopf für ein Koordinatenmeßgerät, umfassend: ein an dem Koordinatenmeßgerät anbringbares Tastkopfchassis, eine an dem Tastkopfchassis aus einer Ruhelage auslenkbar gehalterte starre Taststifthalterung mit einer Längsachse, eine Federanordnung zur Bereitstellung einer Federkraft zur Rückführung der Taststifthalterung in die Ruhelage, und eine an dem Tastkopfchassis vorgesehene Führung, welche an die Taststifthaltenrng an einem ersten Ort der Längsachse angreift und den ersten Ort der Taststifthalterung bezüglich dem Tastkopfchassis in einer Richtung verlagerbar führt, die im wesentlichen mit der Längsrichtung zusammenfällt, dadurch gekennzeichnet, daß die Federanordnung einerseits an dem Tastkopfchassis und andererseits an der Taststifthalterung an einem zweiten Ort der Längsachse festgelegt ist, der mit Abstand von dem ersten Ort angeordnet ist.
Gegenstand 2: Der Tastkopf nach Gegenstand 1, wobei der zweite Ort in einer Ebene zwischen dem ersten Ort und einem für eine Taststiftspitze vorgesehenen Ort angeordnet ist.
Gegenstand 3: Der Tastkopf nach Gegenstand 1 oder 2, wobei die Taststifthalterung durch die Führung schwenkbar an dem Tastkopfchassis anlenkt ist.
Gegenstand 4: Der Tastkopf nach einem der Gegenstände 1 bis 3, wobei die Führung eine einerseits an dem Tastkopfchassis und andererseits an dem ersten Ort der Taststifthalterung festgelegte Membrananordnung aufweist.
Gegenstand 5: Der Tastkopf nach Gegenstand 4, wobei die Membrananordnung durch eine Blattfeder gebildet ist.
Gegenstand 6: Der Tastkopf nach Gegenstand 4 oder 5, wobei die Membrananordnung lediglich über einen Teilumfang um die Längsachse an dem Tastkopfchassis festgelegt ist.
Gegenstand 7: Der Tastkopf nach Gegenstand 6, wobei der Teilumfang einen Winkelbereich von weniger als 40°, insbesondere weniger als 20° umfaßt.
Gegenstand 8: Der Tastkopf nach Gegenstand 6 oder 7, wobei die Membrananordnung eine Mehrzahl parallel zueinander oder im wesentlichen radial bezüglich der Längsachse sich erstreckende Membranstreifen aufweist.
Gegenstand 9: Der Tastkopf nach einem der Gegenstände 6 bis 8, wobei ein Abstand des an dem Tastkopfchassis festgelegten ersten Endes der Membrananordnung von der Längsachse kleiner ist, als ein Abstand zwischen dem ersten Ende und dem an der Tastsäfthafterung festgelegten zweiten Ende der Membrananordnung.
Gegenstand 10: Der Tastkopf nach Gegenstand 9, wobei der Abstand zwischen dem ersten und dem zweiten Ende der Membrananordnung wenigstens das 1,2-fache, insbesondere wenigstens das 1,5-fache, des Abstands des ersten Endes von der Längsachse aufweist.
Gegenstand 11: Der Tastkopf nach einem der Gegenstände 1 bis 10, wobei die Federanordnung eine die Längsachse mehrmals umschließende Spiralfeder oder/und Schraubenfeder umfaßt.
Gegenstand 12: Der Tastkopf nach einem der Gegenstände 1 bis 11, wobei die Federanordnung eine in Längsrichtung orientierte Komponente der Rückstellkraft zu mehr als 70 %, insbesondere zu mehr als 85 %, bereitstellt.
Gegenstand 13: Der Tastkopf für ein Koordinatenmeßgerät, insbesondere nach einem der Gegenstände 1 bis 12, umfassend: ein an dem Koordinatenmeßgerät anbringbares Tastkopfchassis, eine an dem Tastkopfchassis, aus einer Ruhelage auslenkbar gehalterte Taststifthalterung mit einer Längsachse, und ein Auslenkungsmeßsystem zur Erfassung einer Auslenkung der Taststifthalterung bezüglich des Tastkopfchassis, wobei das Auslenkungsmeßsystem eine Mehrzahl von Abstandssensoren mit jeweils einer an der Taststifthalterung vorgesehenen Sensorkomponente und einer an dem Tastkopfchassis vorgesehenen Sensorkomponente umfaßt, wobei die an dem Tastkopfchassis vorgesehenen Sensorkomponenten in Umfangsrichtung um die Längsachse verteilt angeordnet sind und wobei die an dem Tastkopfchassis vorgesehene Sensorkomponente sowie die an der Taststifthalterung vorgesehenen Sensorkomponente wenigstens eines Abstandssensors mit Abstand in Längsrichtung voneinander angeordnet sind.
Gegenstand 14: Der Tastkopf nach Gegenstand 13, wobei die an dem Tastkopfchassis vorgesehenen Sensorkomponenten in einer gemeinsamen Ebene angeordnet sind.
Gegenstand 15: Der Tastkopf nach Gegenstand 13 oder 14, wobei die Abstandssensoren eine gemeinsame an der Taststifthalterung vorgesehene Sensorkomponente aufweisen.
Gegenstand 16: Der Tastkopf nach Gegenstand 15, wobei die an der Taststifthalterung vorgesehene gemeinsame Sensorkomponente ein Sender ist und die an dem Tastkopfchassis vorgesehenen Sensorkomponenten jeweils auf ein von dem Sender emittiertes Signalfeld ansprechende Empfänger sind.
Gegenstand 17: Der Koordinatenmeßgerät mit einer Werkstückhalterung, einem bezüglich der Werkstückhalterung räumlich verfahrbaren Tastkopf nach einem der Gegenstände 1 bis 16 zum Antasten eines an der Werkstückhalterung anbringbaren Werkstücks.

## Patentansprüche

1. Verfahren zum Kalibrieren eines Koordinatenmessgeräts (1) mit einer Werkstückhalterung (7) und einem bezüglich der Werkstückhalterung (7) räumlich verfahrbaren Tastkopf (36), der einen aus einer Ruhelage bezüglich des Tastkopfs (36) gegen Federkraft auslenkbaren Taststift (37) mit einer Taststiftspitze (83) trägt und ein Auslenkungsmesssystem (80) zur Erfassung von Auslenkungen in drei unterschiedlichen Raumrichtungen des Taststifts (37) aus seiner Ruhelage aufweist, und wobei das Verfahren umfasst:
Bereitstellen eines bezüglich der Werkstückhalterung (7) fest angeordneten Tastspitzenhalters (9), durch den die Taststiftspitze (83) bezüglich der Werkstückhalterung (7) lösbar festgehalten werden kann,
In-Eingriff-Bringen von Taststiftspitze (83) und Tastspitzenhalter (9) und
Verfahren des Tastkopfs (36) bezüglich der Werksstückhalterung (7) um vorbestimmte Verfahrwege und Erfassen von Messsignalen des Auslenkungsmesssystems (80) in Abhängigkeit von dem Verfahrweg, während die Taststiftspitze (83) in Eingriff mit dem Tastspitzenhalter (9) steht,
**dadurch gekennzeichnet, dass** das Verfahren des Tastkopfs (36) derart ausgeführt wird, dass ein Zug des Taststifts (37) weg von dem Tastspitzenhalter (9) erzeugt wird.

2. Kalibrierkörper (9) für ein Koordinatenmessgerät (1) mit einem Taststift (37), umfassend einen Taststiftspitzenhalter (103, 101) zur lösbaren Halterung wenigstens einer Komponente (83) des Taststifts (37), insbesondere eines Schafts (79) oder einer Spitze (83) des Taststifts,
wobei der Taststiftspitzenhalter (103, 101) eine Anlagefläche (109) für die Spitze (83) des Taststifts (37) aufweist,
**dadurch gekennzeichnet, dass** der Taststiftspitzenhalter (103, 101) weiter eine Feldquelle (111) zur Bereitstellung einer Haltekraft aufweist, um die Taststiftspitze (83) in Eingriff mit der Anlagefläche (109) zu halten, und wobei die Feldquelle ein Elektromagnet ist.

3. Kalibrierkörper nach Anspruch 2, wobei die Anlagefläche (109) einen Drei-Punkt-Kontakt für die Tastspitze (83) bereitstellt.

4. Kalibrierkörper nach Anspruch 2, wobei die Anlagefläche (109) durch drei nebeneinander angeordnete Kugelteilflächen bereitgestellt ist.

## Claims

1. A method of calibrating a coordinate measuring device (1) comprising a workpiece holder (7) and a scanning head (36), which is spatially movable relative to the workpiece holder (7), said scanning head supporting a scanning stylus (37 with a scanning stylus tip (83), said scanning stylus being displaceable relative to the scanning head (36) out of a rest position against a spring force, said scanning head further comprising a displacement measuring system (80) for detecting displacements in three different spatial directions of the scanning stylus (37) from its rest position, said method comprising:
providing a scanning stylus tip support (9) which is fixedly positioned in respect of the workpiece holder (7) and adapted to releasably hold the scanning stylus tip (83) in position in respect of the workpiece holder (7),
engaging the scanning stylus tip (83) with the scanning stylus tip support (9) and
moving the scanning head (36) in respect of the workpiece holder (7) by predetermined travel paths and detecting measuring signals of the displacement measuring system (80) in dependency of the travel path while the scanning stylus tip (83) is in engagement with the scanning stylus tip support (9), **characterized in that** the moving of the scanning head (36) is performed such that a pulling force of the scanning stylus (37) away from the scanning stylus tip support (9) is produced.

2. A calibration body (9) for a coordinate measuring device (1) with a scanning stylus (37), comprising a scanning stylus tip support (103, 101) for releasably holding at least one component (83) of the scanning stylus (37), in particular of a shaft (79) or of a tip (83) of the scanning stylus, in position,
wherein the scanning stylus tip support (103, 101) comprises an abutment surface (109) for the tip (83) of the scanning stylus (37),
**characterized in that** the scanning stylus tip support (103, 101) further comprises a field source (111) for providing a holding force to keep the scanning stylus tip (83) in engagement with the abutment surface (109), and wherein the field source is an electromagnet.

3. The calibration body according to claim 2, wherein the abutment surface (109) provides a three-point contact for the scanning stylus tip (83).

4. The calibration body according to claim 2, wherein the abutment surface (109) is provided by three spherical segments positioned adjacent each other.

## Revendications

1. Procédé d'étalonnage d'un appareil de mesure de coordonnées (1) comportant un support de pièce (7) et une tête de palpeur (36), mobile dans l'espace par rapport au support de pièce (7), qui porte une tige de palpeur (37) pouvant être écartée contre la force d'un ressort depuis une position de repos par rapport à la tête de palpeur (36) et qui est équipée d'une pointe de contact (83), et un système de mesure de déviation (80) destiné à détecter les déviations dans trois directions spatiales différentes de la tige de palpeur (37) depuis sa position de repos, le procédé comprenant les étapes consistant à :
mettre à disposition un support de pointe de contact (9) disposé de façon fixe par rapport au support de pièce (7), par lequel la pointe de contact (83) peut être retenue de façon détachable par rapport au support de pièce (7),
mettre en prise la pointe de contact (83) et le support de pointe de contact (9), et
déplacer la tête de palpeur (36) par rapport au support de pièce (7) d'une trajectoire prédéterminée et enregistrer les signaux de mesure du système de mesure de déviation (80) en fonction de la trajectoire de déplacement, tandis que la pointe de contact (83) se trouve en prise avec le support de pointe de contact (9), **caractérisé en ce que** le déplacement de la tête de palpeur (36) est exécuté de façon telle qu'une traction de la tige de palpeur (37) est générée dans un sens qui l'éloigne du support de pointe de contact (9).

2. Corps d'étalonnage (9) pour appareil de mesure de coordonnées (1) comportant une tige de palpeur (37), comprenant un support de pointe de contact (103, 101) permettant de retenir de façon détachable au moins un composant (83) de la tige de palpeur (37), en particulier d'un fût (79) ou d'une pointe (83) de la tige de palpeur, dans lequel le support de pointe de contact (103, 101) présente une surface d'appui (109) pour la pointe (83) de la tige de palpeur (37),
**caractérisé en ce que** le support de pointe de contact (103, 101) présente en outre une source de champ (111) permettant de mettre à disposition une force de retenue pour retenir la pointe de contact (83) en prise avec la surface d'appui (109), où la source de champ est un électro-aimant.

3. Corps d'étalonnage selon la revendication 2, dans lequel la surface d'appui (109) met à disposition un contact à trois points pour la pointe de contact (83).

4. Corps d'étalonnage selon la revendication 2, dans lequel la surface d'appui (109) est mise à disposition par trois surfaces partielles en cône disposées les unes à côté des autres.
